# EUROPEAN PATENT APPLICATION

(11) **EP 4 818 949 A1**
(43) Date of publication of application: **07.10.2026**
(21) Application number: 26153985.2
(22) Date of filing: 26.01.2026
(51) Int. Cl.: G06F 21/57, G06F 40/10, G06N 20/00, H04L 9/40, G06F 40/194

(54) **NETWORK ATTACKS**

(30) Priority: 31.03.2025 IL 31997725
(71) Applicant: FUJITSU LIMITED, Kawasaki-shi, Kanagawa 211-8588 (JP); B.G. Negev Technologies and Applications Ltd., 8410501 Beer Sheva (IL)
(72) Inventor: LAVI, Ortal, Slough, SL1 2BE (GB); MANOR, Ofir, Slough, SL1 2BE (GB); MURILLO, Andrés, Slough, SL1 2BE (GB); SEKIYA, Motoyoshi, Slough, SL1 2BE (GB); TAYOURI, David, 8410501 Beer Sheva (IL); DUANI, Elad, 8410501 Beer Sheva (IL); PUZIS, Rami, 8410501 Beer Sheva (IL); SHABTAI, Asaf, 8410501 Beer Sheva (IL)
(74) Representative: Haseltine Lake Kempner LLP

(57) **Abstract**

A computer-implemented method comprising: generating, using a large language model, LLM, and based on information describing a threat to a network, an attack graph, wherein the attack graph comprises nodes corresponding to attack steps and directed edges connecting the nodes; obtaining preliminary attack implementations based on the attack steps in the attack graph, respectively, each preliminary attack implementation comprising code for executing the attack step concerned; assigning, based on information about the network, values to parameters in the preliminary attack implementations to generate objective attack implementations; running an attack on the network or on a simulation of the network by carrying out the objective attack implementations; and outputting a report comprising information indicating outcomes of carrying out the objective attack implementations.

## Description

The present invention relates to network attacks, and in particular to a computer-implemented method, a computer program, and an information programming apparatus.

The threat of cybersecurity attacks is ever present in our world. As digitization is now the norm and not the exception, cyberattacks pose an ever-increasing threat in all sectors. Sectors such as utilities (water, energy, waste management, etc.), defense, finance, and more are all heavily reliant on computers and computer networks. Each of these networks is comprised of many thousands of elements from a variety of vendors and with a variety of functions. The defense of these networks falls primarily on different security teams, some working directly for a company using the networks, and others out for hire. Still, compared to the size and complexity of the networks and their many components, these teams are sometimes overwhelmed by the manual effort and time required to prevent and mitigate novel cyber threats.

Attacks may come from all vectors, from individuals or teams of attackers working on behalf of a government or for other goals. These attackers are aware of the different methods to compromise a network and work tirelessly to find vulnerabilities that will allow them access. Furthermore, with the increasing capabilities of AI (especially LLMs) in all fields, new and imaginative attacks can be constructed at breakneck speed.

Vulnerabilities that have been recently disclosed and still have no mitigations are sometimes called Day One attacks. Once a vulnerability has been discovered, all those who wish to utilize it can do so, knowing that there are new attacks yet to be raised. The amount of time between such an attack being discovered and the proper patches being released or defenses being raised is measured in weeks or even months. This time window poses a grave threat to those using the vulnerable components in their network. Furthermore, usually, it is not feasible to patch all the known vulnerabilities because of a lack of resources. Therefore, it is important to understand the risks of each vulnerability and attack scenario to the organization's network, to prioritize the mitigations.

To minimize the possible damage from a discovered threat, the aforementioned security teams need to first identify if the threat can be exploited to perform an attack against the network they are defending. A short time after a threat is discovered, organizations and individuals will put out information regarding the threat, usually in the form of Cyber Threat Intelligence (CTI) reports. These reports provide a large overview of the threat, describing it at a high level so that all security teams can understand it better. These reports can be long and wordy, describing not only the threat, but also the background, its most likely targets, and sometimes recommended measures. These reports give a generic description of the threat, a description that does not explain how the threat may impact a particular network.

A way to assess network vulnerability is desired.

The present invention is defined by the independent claims, to which reference should now be made. Specific embodiments are defined in the dependent claims.

According to an embodiment of a first aspect there is disclosed herein a computer-implemented method comprising: generating, using a large language model, LLM, and based on information describing a threat to a network, an attack graph/path, wherein the attack graph comprises nodes corresponding to attack steps and directed edges connecting the nodes; obtaining preliminary attack implementations based on the attack steps in the attack graph, respectively, each preliminary attack implementation comprising code for executing the attack step concerned; assigning, based on information about the network, values to parameters in the preliminary attack implementations to generate objective attack implementations; running an attack on the network or on a simulation/model/emulation of the network by carrying out the objective attack implementations; and outputting a report comprising information indicating outcomes of carrying out the objective attack implementations.

Features relating to any aspect/embodiment may be applied to any other aspect/embodiment.

Reference will now be made, by way of example, to the accompanying drawings, in which:
Figure 1 is a flowchart illustrating a method;
Figure 2 is a flowchart illustrating a method;
Figure 3 is a diagram illustrating a stage of the Figure 2 method;
Figure 4 is a diagram illustrating stages of the Figure 2 method;
Figure 5 is a flowchart illustrating a method; and
Figure 6 is a diagram illustrating an information processing apparatus.

### Brief Description of Technical Terms Used (not exhaustive):

AI Agent - This term is still novel in the industry, though it largely refers to an Al (artificial intelligence) with the capabilities to use certain tools, analyze outputs, and converse with other Al agents to achieve an ultimate goal.

Cyber Threat Intelligence (CTI) - Information made public, usually as a professional report (a CTI report), that discloses information regarding a cyber security threat (i.e. an attack, software, a threat actor).

Attack Graph - A directed graph model showing the progression of a cyber-attack. Nodes represent techniques/attack steps and the edges between them show the progression of the attack as it goes through a network.

Generative Al - Artificial intelligence systems capable of generating text, images, videos, or other data using generative models. These models learn the patterns and structure of their input training data and then generate new data that has similar characteristics.

Large Language Models (LLMs) - Al models notable for their ability to achieve general-purpose language generation and other natural language processing tasks such as translation, summarization, and question-answering.

Attack Emulation Platform - Software that allows a user to run an attack on a network (real or emulated), and provides the outputs of each step of the attack for further analysis.

Tactics, Techniques, and Procedures (TTP) - A term commonly used in cyber security to describe the methods and behaviors of cyber-attacks.

Methodologies disclosed herein take as an input a CTI report, and information gathered about a specific network. This is followed by creation of an attack scenario of the attack specified in the report that can run on a specific network. After running the attack on the network, or on a simulation of that network, a report is output describing how well the attack fared, through which elements in the network it passed, and what were the outcomes of each of its steps. This report will allow security teams to adapt their specific network to be defended against the attack.

Methodologies disclosed herein use LLMs, along with graph theory techniques to first extract from the report the stages of the described attack. This is followed by extraction from network information important datapoints that are used for adaptation of attack code to the elements of the network. Finally, an attack emulation platform is used to gather code that executes each part of the attack and run it all on a network (or a simulation of a network). The attack simulation platform then collects the information gathered from running the attack and outputs a full report to the user.

The disclosed methodologies help to reduce the time and manual effort required in evaluating a network vulnerability. For instance, the disclosed methodologies may take the time needed from the report of the attack to evaluating its impact on a network down from weeks to hours. This may help to shorten the time it takes security teams to find and develop defenses against novel threats.

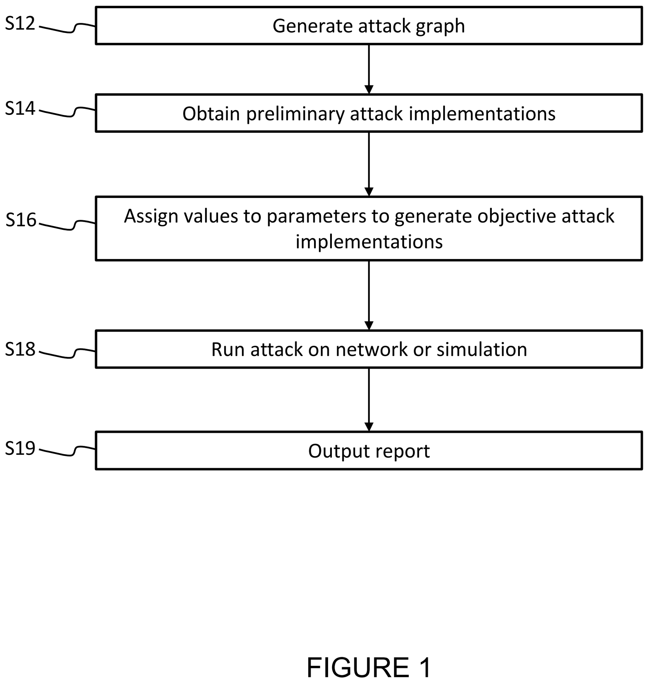

Figure 1 is a flowchart of a method comprising steps S12-S19. Step S12 comprises generating an attack graph. That is, step S12 comprises generating, using a large language model, LLM, and based on information describing a threat to a network, an attack graph, wherein the attack graph comprises nodes corresponding to attack steps and directed edges connecting the nodes.

Step S14 comprises obtaining preliminary attack implementations. That is, step S14 comprises obtaining preliminary attack implementations based on the attack steps in the attack graph, respectively, each preliminary attack implementation comprising code for executing the attack step concerned.

Step S16 comprises assigning values to parameters to generate objective attack implementations. That is, step S16 comprises assigning, based on information about the network, values to parameters in the preliminary attack implementations to generate objective attack implementations.

Step S18 comprises running an attack on the network or a simulation of the network. That is, step S18 comprises running an attack on the network or on a simulation/model/emulation of the network by carrying out the objective attack implementations.

Step S19 comprises outputting a report. That is, step S19 comprises outputting a report comprising information indicating outcomes of carrying out the objective attack implementations.

Accordingly, there is disclosed herein a computer-implemented method comprising: generating, using a large language model, LLM, and based on information describing a threat to a network, an attack graph/path, wherein the attack graph comprises nodes corresponding to attack steps and directed edges connecting the nodes; obtaining preliminary attack implementations based on the attack steps in the attack graph, respectively, each preliminary attack implementation comprising code for executing the attack step concerned; assigning, based on information about the network, values to parameters in the preliminary attack implementations to generate objective attack implementations; running an attack on the network or on a simulation/model/emulation of the network by carrying out the objective attack implementations; and outputting a report comprising information indicating outcomes of carrying out the objective attack implementations.

Each node corresponding to an attack step may comprise a description of the attack step and an identification of the attack step.

The attack graph may comprise a series of nodes connected one after the other.

The information describing the threat to the network may comprise a Cyber Threat Intelligence, CTI, report.

The information describing the threat to the network may comprise an identification of each of a plurality of attack steps and each node corresponding to an attack step comprises a description of the attack step and an identification of the attack step obtained from the identifications in the information describing the threat to the network.

Obtaining the preliminary attack implementations may comprise obtaining the preliminary attack implementations from at least one database of attack implementations.

The at least one database of attack implementations may include a (textual) description for each attack implementation.

Obtaining the preliminary attack implementations from the at least one database of attack implementations may comprise, for each attack step, searching the at least one database based on an/the identification of the attack step in the attack graph and/or a/the (textual) description of the attack step in the attack graph.

Obtaining the preliminary attack implementations from the at least one database of attack implementations may comprise, for each attack step: obtaining at least one candidate attack implementation based on an/the identification of the attack step in the attack graph; and if a plurality of candidate attack implementations are obtained, selecting the attack implementation whose (textual) description is most similar to a/the description of the attack step in the attack graph as the preliminary attack implementation.

Selecting the attack implementation whose description is most similar to the description of the attack step in the attack graph as the preliminary attack implementation may comprise: generating candidate embeddings of the descriptions of the plurality of candidate attack implementations and generating an attack embedding of the description of the attack in the attack graph; computing a similarity of each candidate embedding with the attack embedding; and selecting the candidate attack implementation corresponding to the candidate embedding with the highest similarity as the preliminary attack implementation.

Generating the attack graph may comprise using retrieval augmented generation, RAG.

In the RAG the LLM may refer to at least one document or database describing attack steps.

The at least one database of attack implementations may be the same as the at least one database describing attack steps. The database may include a plurality of records corresponding to attack steps, and include for each record an identification of the attack step, an indication of at least one attack implementation for carrying out the attack step, and a (textual) description of the or each at least one attack implementation.

The at least one database or document of attack steps and the at least one database of attack implementations may refer to the attack steps and the attack implementations according to a cyber-security threat model/framework.

Generating the attack graph may comprise using retrieval augmented generation, RAG, and in the RAG the LLM may refer to at least one document or database describing attack steps. Obtaining the preliminary attack implementations may comprise obtaining the preliminary attack implementations from at least one database of attack implementations. The at least one database or document of attack steps and the at least one database of attack implementations may refer to the attack steps and the attack implementations according to a cyber-security threat model/framework.

Assigning, based on information about the network, values to parameters in the preliminary attack implementations to generate objective attack implementations may comprise assigning at least one network address and/or network name in the information about the network to at least one parameter representing a network address and/or network name in at least one of the preliminary attack implementations.

Assigning, based on information about the network, values to parameters in the preliminary attack implementations to generate objective attack implementations may comprise assigning values based on OS commands corresponding to a network component/device to parameters in at least one of the preliminary attack implementations.

The OS commands corresponding to the network component/device may be obtained based on a model name and/or vendor of the network component/device.

The information about the network may comprise any of network addresses of network components/devices in the network, OS commands corresponding to network components/devices in the network, and model names and/or vendors of network components/devices in the network.

Each preliminary attack implementation may comprise code for executing the attack step concerned on a generic network.

Carrying out the objective attack implementations may comprise executing code included in each of the objective attack implementations.

Running the attack on the network or on the simulation of the network by carrying out the objective attack implementations may comprise executing an attack emulation platform agent on at least one computing device connected to the network.

The objective attack implementations may be carried out by the at least one attack emulation platform agent.

For at least one of the preliminary attack implementations, the assigning of a value to at least one of the parameters may comprise assigning a plurality of alternative values to the at least one parameter, and running the attack on the network or on the simulation of the network may comprise running a plurality of attacks corresponding to the plurality of alternative values.

Running the attack may comprise carrying out the objective attack implementations in an order according to the attack graph.

The directed edges may indicate an order in which the attack steps are to be performed.

The order in which the attack implementations are carried out may be based on (or may be the same as) the order in which the attack steps are to be performed.

Each directed edge may indicate that the attack step corresponding to the node at which the directed edge originates is to be performed before the attack step corresponding to the node at which the edge terminates.

The information indicating outcomes of carrying out the objective attack implementations may comprise at least one output of at least one terminal in the network or simulation after carrying out the objective attack implementations.

The information indicating outcomes of carrying out the objective attack implementations may comprise at least one log of at least one computing device in the network or simulation that was affected by the attack.

The information indicating outcomes of carrying out the objective attack implementations may comprise information indicating whether at least one of the objective attack implementations was successful.

The computer-implemented method may comprise computing a vulnerability score based on what proportion of the objective attack implementations were successful in the attack, and the information indicating outcomes of carrying out the objective attack implementations may comprise the vulnerability score.

According to an embodiment of a second aspect there is disclosed herein a computer program which, when run on a computer, causes the computer to carry out a method comprising: generating, using a large language model, LLM, and based on information describing a threat to a network, an attack graph, wherein the attack graph comprises nodes corresponding to attack steps and directed edges connecting the nodes; obtaining preliminary attack implementations based on the attack steps in the attack graph, respectively, each preliminary attack implementation comprising code for executing the attack step concerned; assigning, based on information about the network, values to parameters in the preliminary attack implementations to generate objective attack implementations; running an attack on the network or on a simulation/model/emulation of the network by carrying out the objective attack implementations; and outputting a report comprising information indicating outcomes of carrying out the objective attack implementations.

According to an embodiment of a third aspect there is disclosed herein an information processing apparatus comprising a memory and a processor connected to the memory, wherein the processor is configured to: generate, using a large language model, LLM, and based on information describing a threat to a network, an attack graph, wherein the attack graph comprises nodes corresponding to attack steps and directed edges connecting the nodes; obtain preliminary attack implementations based on the attack steps in the attack graph, respectively, each preliminary attack implementation comprising code for executing the attack step concerned; assign, based on information about the network, values to parameters in the preliminary attack implementations to generate objective attack implementations; run an attack on the network or on a simulation/model/emulation of the network by carrying out the objective attack implementations; and output a report comprising information indicating outcomes of carrying out the objective attack implementations.

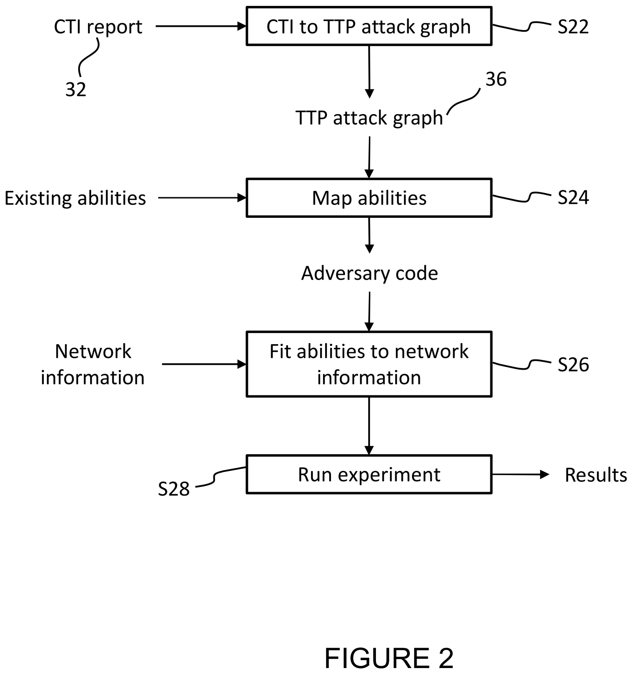

Figure 2 is a flowchart illustrating a method comprising steps S22-S28. The Figure 2 method may be considered a particular implementation of the Figure 1 method.

The method is comprised of 4 stages/steps. The output of each stage leads into another creating a modular flow that allows for each output to be reused or scrutinized.

Stages:
1. CTI to TTP Attack Graph (S22)
2. Map Abilities (S24)
3. Fit Abilities to Network Information (S26)
4. Build the Experiment (S28)

CTI to TTP Attack Graph (step S22):

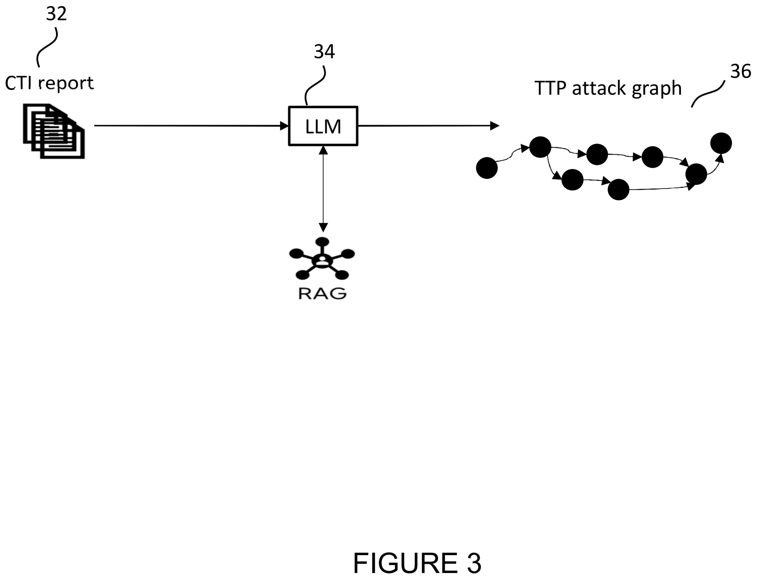

Figure 3 shows an overview of this stage.

In this initial step, the input is a CTI report 32. This report includes all the information needed in order to understand the simulated cyberattack. CTI reports (e.g. report 32) are usually prepared by humans, and include a natural language description which may include special terminology relating to cybersecurity, and for example may name one or more particular techniques/attack methods. A CTI report (e.g. report 32) may describe the behavior of an adversary attacking the network in question - for example, the described behavior may include the sending of an email notifying the recipient that their account has been blocked (phishing), and/or other behavior. CTI reports (e.g. report 32) are sometimes very detailed and technical in terms of the language used, and sometimes mostly natural language that is more commonly understood.

As an example of the special terminology that may be used, terminology used in the MITRE ATT&CK framework (attack.mitre.org/) may be used. In the MITRE ATT&CK framework, an attacker has objectives which are termed "tactics" and they achieve these objectives using "techniques". The MITRE ATT&CK framework includes a knowledge base of adversary tactics and techniques. Terminology according to other such frameworks may be used as well or instead of MITRE.

The CTI report 32 may contain more information such as prelude, conclusion, information about the reporting agencies, possible targets, information about the threat group, and more. Such additional information may not be used in the generation of the graph.

The report 32 is input into an LLM 34 along with instructions to extract an attack graph. The instructions are for the output of the LLM 34 to be comprised of edges and nodes in the form of a regularly connected directed graph. The nodes contain MITRE ATT&CK technique IDs. These IDs are representative of each step of the attack. The edges connect nodes in such a way that the graph describes the sequence of events in the attack in their order from the root to all the possible leaves of the graph. The use of MITRE ATT&CK IDs in the nodes of the attack graph is merely part of this specific implementation but is not essential. Other frameworks/models may be used which give rise to IDs for particular attack steps/techniques. For example, the STRIDE framework/model may be used. Such frameworks or models may be referred to as cyber-security threat frameworks or cyber-security threat models.

The next step is verifying that the output of the LLM is indeed a directed, connected graph. If the output is not, then the process is rerun. The next step is validating the graph, e.g. ensuring that the IDs selected and their placement in the graph are correct. If not, then the process is run again from the beginning. For instance, validation may include checking that each attack ID in the attack graph is indeed an attack ID in the MITRE ATT&CK framework/database. Alternatively or additionally, the validation may comprise checking that each attack ID in the attack graph corresponds to an attack step described in the CTI report (e.g. that each attack ID (or identification) is also in the CTI report (or more generally the information describing the threat to the network)). Verification may be performed automatically (it will be appreciated that there are known methods for automatically checking whether a graph is a directed, connected graph. Validation may be performed automatically and/or by a human. For instance, the CTI report may include IDs of attack steps and thus the checking that IDs in the attack graph are included in the CTI report may be done automatically. Further validation may be performed by a human. The verification and validation steps are not essential and may be omitted.

The final output of the first stage (S22) is a (verified and validated) attack graph 36 as described above which may be referred to as a TTP attack graph 36. In the attack graph 36, nodes correspond to attack steps/techniques and the directed edges connect the nodes according to the order in which the attack steps are to be performed. The attack graph 36 may also comprise nodes corresponding to states of the system. Each node corresponding to an attack step, in the Figure 2 implementation, comprises an identification (ID) of the attack step and a description of the attack step. The identification of the attack step is an ID of the attack step/technique in an attack framework or database, e.g. MITRE as noted above.

As shown in Figure 3, the LLM 34 may use retrieval augmented generation (RAG) in generating the attack graph 36. The LLM may use RAG and refer to a database of attack steps, each step having an ID and a description. For instance, the database may be based on the MITRE ATT&CK framework/model, or another framework/model.

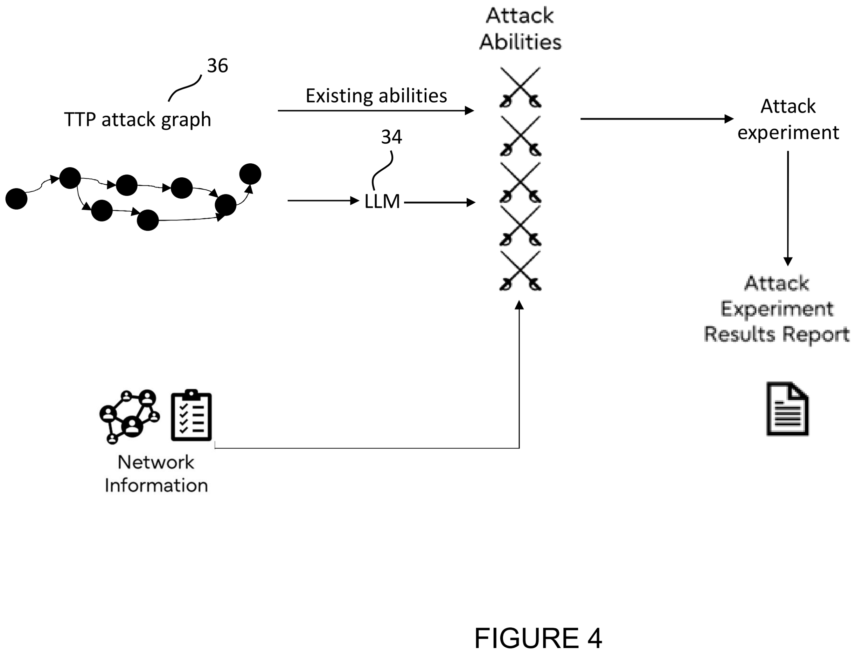

Figure 4 shows an overview of the next three stages (S24-S28).

### Map Abilities (step S24):

The attack graph 36 provides the specific techniques needed. With this information, attack code is chosen to represent each part of the attack path so that the entire attack can be tested. In this particular implementation the code is gathered from the attack emulation platform (i.e. Caldera). In the attack emulation platform, there are 'abilities', each one representing an attack. These abilities coincide directly with MITRE ATT&CK techniques, and each one contains code that can be run on different operating systems that simulates the technique. With the information gathered from the attack path, the most fitting abilities are chosen so that they accomplish each part of the attack path and that they have the appropriate code to be run on the systems shown in the facts of the attack path.

The "techniques" described above may be referred to more generally as attack steps. The "abilities" referred to above may be referred to more generally as attack implementations. It is described above that code is gathered from the attack emulation platform. In general, attack implementations (which include code for implementing the attack steps) are obtained from at least one database of attack implementations. The attack implementations, generally, correspond to IDs of attack steps used in the attack graph. That is, in the specific implementation described herein, the attack steps are attack techniques with IDs according to the MITRE ATT&CK framework, and the abilities (code) for implementing the techniques are obtained from the emulation platform according to the IDs. More generally, attack steps are obtained from a database of attack steps and attack implementations for implementing the attack steps are obtained from a database of attack implementations. In the latter case, each node corresponding to an attack step includes an identification (e.g. ID) which may be used to obtain the attack implementations.

The database of attack implementations may include more than one candidate attack implementation for a given attack step ID (and there may be more than one ability corresponding to a given MITRE technique ID). In such cases, the appropriate attack implementation is obtained by finding the candidate attack implementation most similar to the description of the attack step in the attack graph 36. For example, the description of each candidate attack implementation is embedded to generate candidate embeddings, and the description of the attack step is embedded to generate an attack embedding - a similarity is computed of each candidate embedding with the attack embedding, and the candidate attack implementation with the highest similarity is selected. The above description applies equally in the implementation in which the attack steps are techniques and the attack implementations are abilities.

The descriptions are embedded by a text embedding model, e.g. any of Ada (as used in Chat-GPT, from OpenAl), Gemini (Google) and LLaMa (Meta).

The similarity may be computed as a similarity score and may be computed by computing the Euclidean distance or cosine similarity between the embeddings concerned. That is, embedding the descriptions using the text embedding model will generate embeddings, which are vectors, and the similarity between two of these vectors may be computed by computing the Euclidean distance and/or the cosine similarity between the two vectors.

### Fit Abilities to Network Information (step S26):

The information gathered about the network is used to fill in gaps present in the abilities so that they reflect how such attack codes would be run on the specific network to be tested. The correct operating system out of the possibilities of the abilities is chosen. Further information, such as network addresses (IPs) and/or names and/or models/vendors of attacked network components, are also chosen from the information. For instance, in an example an attack implementation is fitted to a device (e.g. router) based on the vendor and/or model concerned (Cisco, Juniper, Huawei, etc.) using its own personal OS (operating system) commands, and the names of components/devices are used in the attack implementation (e.g. "router1", "admin", "VLAN2", etc.).. In some cases several network components could be the target of parts of the attack. In that case, where there are several possible assignments for an attack, one of the following will be done:
1. Each assignment will be tested in turn (in the following stage (S28))
2. A single random assignment will be selected
3. The user will be requested to choose between all possible assignments

In general the network information may comprise any of textual topology representation, configuration files and a list of software represented in the topology.

Step S26 may carried out using a simple script or may be carried out manually. The filling in of the gaps may be referred to as assigning values to parameters in the abilities. This may include, in some cases, generating text - for instance, if the ability is to send a phishing email, assigning values to parameters in the ability may include generating the text of the phishing email. As shown in Figure 4, the LLM 34 (or another LLM) may be used to generate values for parameters, for example the text of a phishing email.

In this implementation abilities are used, but as noted above, more generally, "attack implementations" may be used. The attack implementations obtained in step S24 may be referred to as preliminary attack implementations and the attack implementations output from step S26 may be referred to as objective attack implementations.

### Build and run the Experiment (step S28):

A network is chosen to run the attack scenario on. This network can be the original network from where the information was gained or it can be an emulated/simulated/modelled version of it. Computers connected to the network that are supposed to act as the adversarial computers are chosen and have an attack emulation platform agent placed on them and run. Then the attack emulation platform, through these agents, runs the list of abilities in a process called 'operation.' This 'operation' runs each 'ability' according to the way they were gathered and with the information fitted to them from the network information, and for each 'ability' it collects the output of running that code (e.g. the output of at least one terminal after running the attacks). After all the 'abilities' are run it outputs a report showing how each 'ability' faired in its task and what the output was. Furthermore, logs are collected from all the machines where the 'abilities' affected them. These together make up the full report that is given to the network security teams to use to create better mitigations for their system.

In this implementation an attack simulation runner (such as MITRE's Caldera (caldera.mitre.org/)) is used. It can execute attack code on a simulated network and retrieve the results in order to use for analysis.

Of course, as already noted, "abilities" may instead be considered "attack implementations" more generally. The operation may be referred to as an attack. The report may comprise an indication of whether at least one of the objective attack implementations was successful. The report may comprise a vulnerability score computed according to what proportion of the objective attack implementations were successful, for instance a percentage score. "Ability" is a term commonly used in Caldera.

The order in which the objective attack implementations are run is based on the order of the corresponding attack steps in the attack graph 36.

As described above, the Figure 2 method may be considered an implementation of the Figure 1 method. Step S22 may be considered to correspond to step S12 and corresponding description may apply and vice versa. Step S24 may be considered to correspond to step S14 and corresponding description may apply and vice versa. Step S26 may be considered to correspond to step S16 and corresponding description may apply and vice versa. Step S28 may be considered to correspond to step S18 (and step S19) and corresponding description may apply and vice versa.

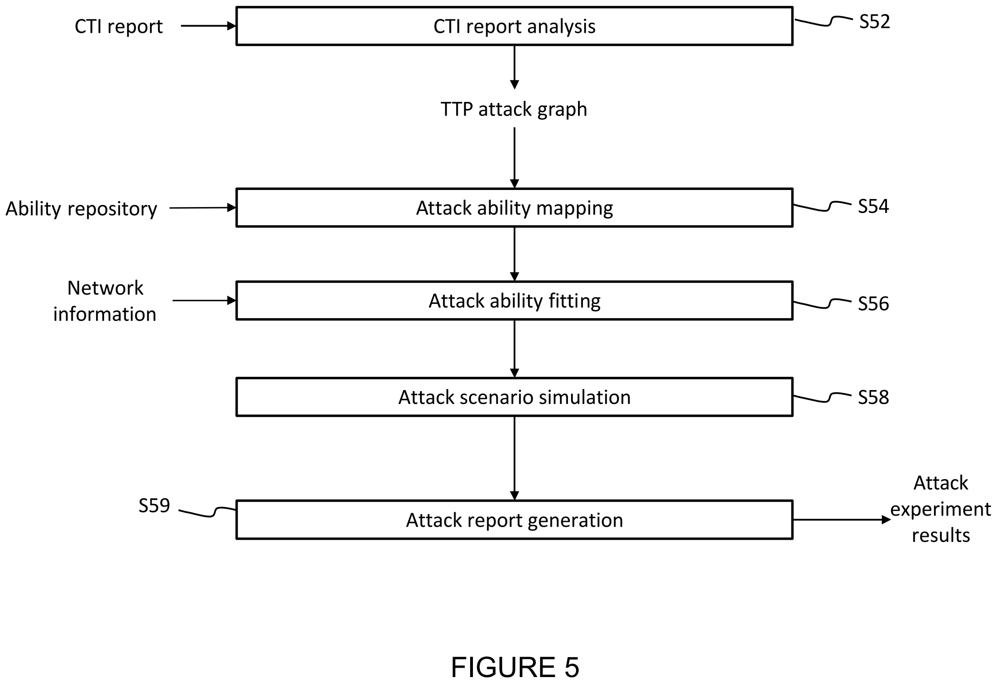

Figure 5 is a flowchart illustrating a method comprising steps S52-S59. The Figure 5 method may be considered an implementation of the Figure 2 method. The Figure 5 method uses "techniques" and "abilities" according to the MITRE ATT&CK framework. As with the Figure 2 method, other frameworks may be used and techniques and abilities may be referred to more generally as attack steps and attack implementations.

Step S52 comprises receiving a CTI report and performing CTI report analysis to generate a TTP attack graph. Step S54 comprises attack ability mapping. That is, step S54 comprises obtaining from an ability repository attack abilities corresponding to the techniques in the TTP attack graph.

Step S56 comprises attack ability fitting. That is, step S56 comprises fitting the attack abilities obtained in step S54 to the particular network using the network information, which may be considered assigning values to parameters in the attack abilities, based on the network information.

Step S58 comprises attack scenario simulation. That is, step S58 comprises running the attack abilities fitted to the network information on an emulation platform simulating the network concerned. This step may be referred to as an attack emulation operation.

Step S59 comprises attack report generation. That is, step S59 comprises generating a report based on the attack scenario simulation in step S58 and outputting the report as attack experiment results.

As described above, the Figure 5 method may be considered an implementation of the Figure 1 method. Step S52 may be considered to correspond to step S12 and/or step S22 and corresponding description may apply and vice versa. Step S54 may be considered to correspond to step S14 and/or step S24 and corresponding description may apply and vice versa. Step S56 may be considered to correspond to step S16 and/or step S26 and corresponding description may apply and vice versa. Step S58 may be considered to correspond to step S18 and/or partially step S28 and corresponding description may apply and vice versa. Step S59 may be considered to correspond to step S19 and/or partially step S28 and corresponding description may apply and vice versa.

In any of the above methods, the attack graph may instead be considered and referred to as an attack path. Although the representation of the attack graph in the Figures shows e.g. a node connected to three other nodes, in any of the above methods the attack graph may instead include a series of nodes connected one after the other. In this way, such an attack graph may be considered an attack path, in the sense that it represents a single "path" or series of attack steps to be implemented to carry out an attack.

In any of the above methods, the network may comprise a network of computing devices connected together via a public network (e.g. the internet) or via a private network (e.g. an intranet). The network may be a network within a workplace or business or a home network. The network may comprise a portion which is private and a portion which is public. A private network (or portion) may be accessible via a public network (e.g. the internet) upon verification/authorization based on suitable login information/credentials. For instance, a VPN provider (or user) may benefit from the disclosed methodologies - e.g. Ivanti Connect Secure, which allowed cyber-attackers to get access to an enterprise network behind a VPN; this vulnerability was only patched months after it was discovered. The disclosed methodologies could help reduce the time any enterprise who used their VPN would need to defend itself against attackers using that vulnerability.

Methodologies disclosed herein could be used in the maintenance of networks. The usage of attack graphs and LLM understandings of reports could be modified to create basic maintenance tests that would not require the entire network to shut down and could be done automatically.

Methodology disclosed herein provides a full experiment of a novel attack on a designated network. It recreates the attack path on a specific network, having each part of the attack target the specific component of the network as if it were an actual attack committed by an adversarial agent. Because the attack is controlled, each part of the attack is monitored, and the outputs of these actions are recorded. These make up the full report at the end.

This solves the problems arising from either not testing the attack on any network or testing it on a generic network. The former still leaves a lot to be desired by security personnel, who have to take this abstract form of the attack and then recreate it on their own systems or simply attempt to predict how each step would appear in their system and how to stop it. The latter, while providing some more information, still leaves it in an abstract format. The generic network does not take the specific components of the specific network into account. It leaves out any defenses or programs that might be running on the actual network of the enterprise that may help or hinder the attack - thus, yet again, forcing security personnel to go the extra step of either recreating the attack on their network, or attempting to understand form the generic network how the attack would look at their own network.

Disclosed methodologies provide a way to get an accurate understanding of how a novel attack, whose defenses could still be months away from release, would affect a specific network, without damaging said network. And this will provide within hours (or less) the information the team needs in order to create defenses against such attack in the future.

Advantages of the methodologies disclosed herein include (among others):
- Reduction in Mitigation Development Time: The benefit is a large reduction in the time between the discovery of a new cyber threat to the implementation of mitigations against that threat in specific networks. Understanding how a cyber threat would affect a network from a report is a long and arduous task, and automating it results in days saved.
- Detailed Explanations of Security Incidents: The disclosed methodologies provides detailed explanations about the cyber threat in the designated network. The final report produced shows exactly, and in every way, how the attack would occur in the network, what signs it would leave, and how it would affect the network.
- Enhanced Efficiency and Reduced Costs: The disclosed methodologies reduce manual analysis and intervention times in addition to costs associated with such interventions.
- Improved Accuracy and Reliability: Using LLMs, specific attack graphing tools, and attack simulation may create a more accurate description of the attack on the network than could generally be provided by a human.
- Ability to Scale and Adapt: The output allows for further work to be done to automate the next steps of the mitigation creation process, such as testing new mitigations and finding the optimal mitigation strategy to minimize negative effects on the network.

The disclosed methodologies provide a mechanism to automatically test a novel cyber threat on a network (or simulated network) by extracting relevant information from a CTI report, using an attack graph, and testing the attack on the network.

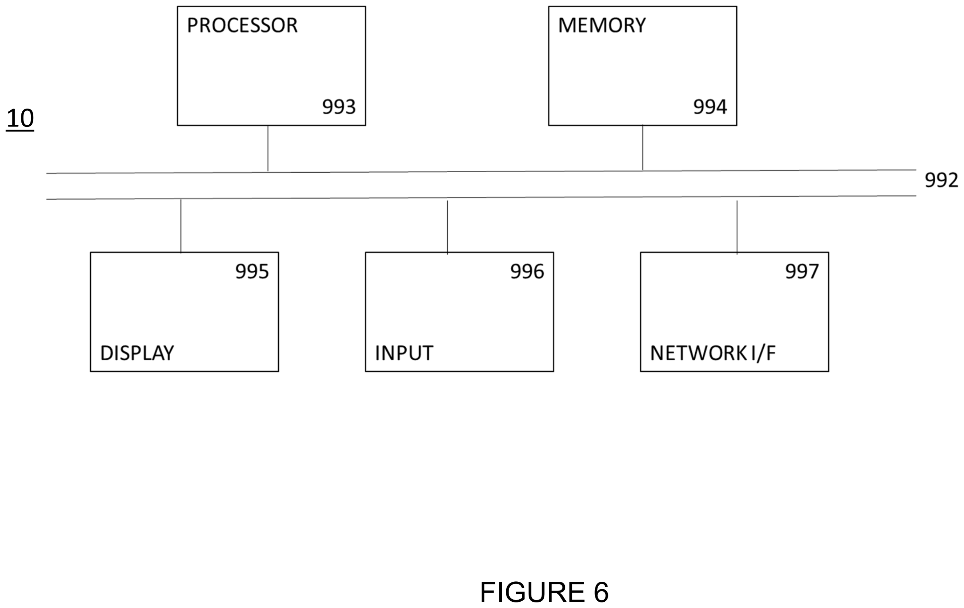

Figure 6 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above, e.g. any of steps S12-S19, S22-S28 and S52-S59.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, e.g. any of steps S12-S19, S22-S28 and S52-S59. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store network information and/or at least one attack graph and/or at least one CTI report and/or information indicating attack steps and/or attack step identifications (IDs) and/or attack implementations and/or attack implementation IDs and/or at least one database of attack steps and/or at least one database of attack implementations and/or an LLM and/or emulation information and/or a network simulation and/or a report and/or input data and/or other data, described above, and/or programs for executing any of the method steps described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as network information and/or at least one attack graph and/or at least one CTI report and/or information indicating attack steps and/or attack step identifications (IDs) and/or attack implementations and/or attack implementation IDs and/or at least one database of attack steps and/or at least one database of attack implementations and/or an LLM and/or emulation information and/or a network simulation and/or a report and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 6. Such a computing device need not have every component illustrated in Figure 6, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention, e.g. any of steps S12-S19, S22-S28 and S52-S59, may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

## Claims

1. A computer-implemented method comprising:
generating, using a large language model, LLM, and based on information describing a threat to a network, an attack graph, wherein the attack graph comprises nodes corresponding to attack steps and directed edges connecting the nodes;
obtaining preliminary attack implementations based on the attack steps in the attack graph, respectively, each preliminary attack implementation comprising code for executing the attack step concerned;
assigning, based on information about the network, values to parameters in the preliminary attack implementations to generate objective attack implementations;
running an attack on the network or on a simulation of the network by carrying out the objective attack implementations; and
outputting a report comprising information indicating outcomes of carrying out the objective attack implementations.

2. The computer-implemented method as claimed in claim 1, wherein each node corresponding to an attack step comprises a description of the attack step and an identification of the attack step.

3. The computer-implemented method as claimed in claim 1 or claim 2, wherein obtaining the preliminary attack implementations comprises obtaining the preliminary attack implementations from at least one database of attack implementations.

4. The computer-implemented method as claimed in claim 3, wherein obtaining the preliminary attack implementations from the at least one database of attack implementations comprises, for each attack step:
obtaining at least one candidate attack implementation based on an identification of the attack step in the attack graph; and
if a plurality of candidate attack implementations are obtained, selecting the attack implementation whose description is most similar to a description of the attack step in the attack graph as the preliminary attack implementation.

5. The computer-implemented method as claimed in claim 4, wherein selecting the attack implementation whose description is most similar to the description of the attack step in the attack graph as the preliminary attack implementation comprises:
generating candidate embeddings of the descriptions of the plurality of candidate attack implementations and generating an attack embedding of the description of the attack in the attack graph;
computing a similarity of each candidate embedding with the attack embedding; and
selecting the candidate attack implementation corresponding to the candidate embedding with the highest similarity as the preliminary attack implementation.

6. The computer-implemented method as claimed in any of the preceding claims, wherein generating the attack graph comprises using retrieval augmented generation, RAG.

7. The computer-implemented method as claimed in claim 6, wherein in the RAG the LLM refers to at least one document or database describing attack steps.

8. The computer-implemented method as claimed in claim 1 or claim 2,
wherein generating the attack graph comprises using retrieval augmented generation, RAG, and wherein in the RAG the LLM refers to at least one document or database describing attack steps,
wherein obtaining the preliminary attack implementations comprises obtaining the preliminary attack implementations from at least one database of attack implementations,
and wherein the at least one database or document of attack steps and the at least one database of attack implementations refer to the attack steps and the attack implementations according to a cyber-security threat model.

9. The computer-implemented method as claimed in any of the preceding claims, wherein assigning, based on information about the network, values to parameters in the preliminary attack implementations to generate objective attack implementations comprises assigning at least one network address and/or network name in the information about the network to at least one parameter representing a network address and/or network name in at least one of the preliminary attack implementations.

10. The computer-implemented method as claimed in any of the preceding claims, wherein each preliminary attack implementation comprises code for executing the attack step concerned on a generic network.

11. The computer-implemented method as claimed in any of the preceding claims, wherein carrying out the objective attack implementations comprises executing code included in each of the objective attack implementations.

12. The computer-implemented method as claimed in any of the preceding claims, wherein running the attack on the network or on the simulation of the network by carrying out the objective attack implementations comprises executing an attack emulation platform agent on at least one computing device connected to the network.

13. The computer-implemented method as claimed in any of the preceding claims, comprising computing a vulnerability score based on what proportion of the objective attack implementations were successful in the attack, wherein the information indicating outcomes of carrying out the objective attack implementations comprises the vulnerability score.

14. A computer program which, when run on a computer, causes the computer to carry out a method comprising:
generating, using a large language model, LLM, and based on information describing a threat to a network, an attack graph, wherein the attack graph comprises nodes corresponding to attack steps and directed edges connecting the nodes;
obtaining preliminary attack implementations based on the attack steps in the attack graph, respectively, each preliminary attack implementation comprising code for executing the attack step concerned;
assigning, based on information about the network, values to parameters in the preliminary attack implementations to generate objective attack implementations;
running an attack on the network or on a simulation of the network by carrying out the objective attack implementations; and
outputting a report comprising information indicating outcomes of carrying out the objective attack implementations.

15. An information processing apparatus comprising a memory and a processor connected to the memory, wherein the processor is configured to:
generate, using a large language model, LLM, and based on information describing a threat to a network, an attack graph, wherein the attack graph comprises nodes corresponding to attack steps and directed edges connecting the nodes;
obtain preliminary attack implementations based on the attack steps in the attack graph, respectively, each preliminary attack implementation comprising code for executing the attack step concerned;
assign, based on information about the network, values to parameters in the preliminary attack implementations to generate objective attack implementations;
run an attack on the network or on a simulation of the network by carrying out the objective attack implementations; and
output a report comprising information indicating outcomes of carrying out the objective attack implementations.
